# EUROPEAN PATENT SPECIFICATION

(11) **EP 2 036 609 B1**
(45) Date of publication and mention of the grant of the patent: **29.01.2014**
(21) Application number: 07767832.4
(22) Date of filing: 28.06.2007
(51) Int. Cl.: B01J 35/04, B01D 39/00, B01D 39/20, B01D 46/00, B01D 53/86, B01D 46/24, F01N 3/28

(54) **HONEYCOMB STRUCTURE AND METHOD OF MANUFACTURING THE SAME**
WABENSTRUKTUR UND HERSTELLUNGSVERFAHREN DAFÜR
STRUCTURE EN NID D'ABEILLES ET PROCÉDÉ POUR SA FABRICATION

(30) Priority: 03.07.2006 JP 2006183050
(43) Date of publication of application: 18.03.2009
(73) Proprietor: NGK Insulators, Ltd., Nagoya-shi, Aichi 467-8530 (JP)
(72) Inventor: ICHIKAWA, Yukihito, Nagoya-shi, Aichi 467-8530 (JP)
(74) Representative: Paget, Hugh Charles Edward
(86) International application number: PCT/JP2007/063039
(87) International publication number: WO 2008/004492

(56) References cited:
- EP-A1- 1 538 133
- JP-A- 62 072 553
- JP-A- 2003 024 726
- JP-A- 2004 255 377
- JP-A- 2005 154 202
- US-A1- 2005 229 565

## Description

### Technical Field

The present invention relates to a honeycomb structure and a method for manufacturing the honeycomb structure. More preferably, the present invention relates to a honeycomb structure capable of inhibiting damages such as chipping in an end portion from being caused upon a treatment of exhaust gas or the like while being fixed in a metal container, and a method for manufacturing such a honeycomb structure.

### Background Art

Honeycomb structures of ceramic are used in order to trap particulate matter such as dust contained in automobile exhaust gas or combustion exhaust gas or the like generated upon combustion of wastes and further in order to adsorb and absorb NOₓ, CO, HC, and the like, in the above exhaust gas by a catalyst loaded on the honeycomb structures. Such a ceramic honeycomb structure is generally fixed (canning) in a cylindrical metal container (converter container), where high temperature exhaust gas or the like is sent.

A honeycomb structure thus fixed in a metal container sometimes had damages such as chipping when it was heated by high temperature exhaust gas or the like. In particular, a honeycomb structure having an outer peripheral coat portion on the outer peripheral face thereof (see, e.g., Patent Documents 1 and 2) has a problem of being damaged in the outer peripheral coat portion or partition walls in an outer peripheral portion of both the end portions.
Patent Document 1: JP-A-3-275309
Patent Document 2: JP-A-5-269388

The EP1538309 describes a honeycomb having a peripheral outer coating layer.

### Disclosure of the Invention

In general, in the case of fixing a. ceramic honeycomb structure in a cylindrical metal container, both the end faces of the honeycomb structure are held by holding members (retainer rings) lest the honeycomb structure should move in the axial direction. The retainer rings are generally fixed on the inside surface of the metal container by welding or the like. Since a cylindrical metal container thermally expands in an outward direction (toward outside in a diametrical direction in a cross-section perpendicular to the axial direction of the cylindrical shape (direction of increasing the diameter)) by high temperature exhaust gas or the like, the retainer rings fixed on the inside surface of the metal container also move in the outward direction at the same time. In contrast, since a ceramic honeycomb structure has a lower thermal expansion coefficient than the metal container and, therefore, has a small amount of expansion in the outward direction, the retainer rings holding the end faces of the honeycomb structure relatively moves on the end faces of the honeycomb structure in the outward direction. This causes a state that the retainer rings make a scratch in the outward direction on the end faces of the honeycomb structure to generate tensile stress in the outward direction in the outer peripheral portion of the end faces of the honeycomb structure, which is prone to cause a chipping in the outer peripheral coat portion and partition walls.

The present invention has been made in view of the above problem and is characterized by providing a honeycomb structure capable of inhibiting damages such as chipping in an end portion from being caused upon a treatment of exhaust gas or the like while being fixed in a metal container, and a method for manufacturing such a honeycomb structure.

In order to solve the above problem, according to the present invention, there is provided the following honeycomb structure and manufacturing method thereof.
[1] A honeycomb structure as set out in claim 1.
[2] A honeycomb structure according to item [1], wherein the end portion in the axial direction is formed into a tapered shape.
[3] A honeycomb structure according to item [1] or [2], wherein the honeycomb structure is further provided with plugging portions plugging openings of predetermined cells on one end portion side and openings of remaining cells on the other end portion side.
[4] A method for manufacturing a honeycomb structure, as set out in claim 4 (first aspect of the manufacturing method).
[5] A method for manufacturing a honeycomb structure, as set out in claim 5. (second aspect of the manufacturing method).

According to a honeycomb structure of the present invention, an end face of the outer peripheral coat portion is formed to be located on the inside in the axial portion of an end face of the honeycomb structured portion. Therefore, when the honeycomb structure is fixed in a metal container in a state that both the end portions are held by retainer rings, the retainer rings are inhibited from being brought into contact with the end faces of the outer peripheral coat portion, and thereby the outer peripheral coat portion and partition walls can be inhibited from chipping. In addition, according to a method for manufacturing a honeycomb structure of the present invention, the aforementioned honeycomb structure of the present invention can effectively be manufactured.

### Brief Description of the Drawings

Figs. 1 schematically show an embodiment of a honeycomb structure of the present invention. Fig. 1(a) is a cross-sectional view taken along a plane including the central axis, and Fig. 1(b) is a cross-sectional view taken along a plane perpendicular to the central axis.
Fig. 2 is a cross-sectional view including the central axis and schematically showing a state that an embodiment of a honeycomb structure of the present invention is fixed in a cylindrical metal container.
Fig. 3 schematically shows an embodiment of a honeycomb structure of the present invention and is a cross-sectional view where a part of a cross-section perpendicular to the central axis is enlarged.
Fig. 4 schematically shows an embodiment of a honeycomb structure of the present invention and is a cross-sectional view where a part of a cross-section perpendicular to the central axis is enlarged.
Figs. 5 schematically show another embodiment of a honeycomb structure of the present invention. Fig. 5(a) is a cross-sectional view including the central axis, and Fig. 5 (b) is a cross-sectional view perpendicular to the central axis.
Fig. 6 schematically shows another embodiment of a honeycomb structure of the present invention and is a partial cross-sectional view where a tapered portion in a cross-section including the central axis is enlarged.
Fig. 7 is a cross-sectional view including the axial direction and schematically showing grinding of a peripheral edge portion of a honeycomb formed body with a grinding stone in an embodiment of a method for manufacturing a honeycomb structure (first aspect of the manufacturing method) of the present invention.
Fig. 8 is a cross-sectional view including the central axis and schematically showing a step in an embodiment of a method for manufacturing a honeycomb structure (first aspect of the manufacturing method) of the present invention.
Fig. 9 is a cross-sectional view including the central axis and schematically showing a state that a honeycomb structure is manufactured in an embodiment of a method for manufacturing a honeycomb structure (first aspect of the manufacturing method) of the present invention.
Fig. 10 is a cross-sectional view including the central axis and schematically showing a step in an embodiment of a method for manufacturing a honeycomb structure (second aspect of the manufacturing method) of the present invention.
Fig. 11 is a cross-sectional view including the central axis and schematically showing an outer periphery-coated honeycomb formed body obtained in an intermediate stage in an embodiment of a method for manufacturing a honeycomb structure (second aspect of the manufacturing method) of the present invention.
Fig. 12 is a cross-sectional view including the central axis and schematically showing a step in an embodiment of a method for manufacturing a honeycomb structure (second aspect of the manufacturing method) of the present invention.

### Description of Reference Numerals

1, 51: honeycomb structured portion, 1a, 51a: end face of honeycomb structured portion; 1b, 51b: outer periphery of honeycomb structured portion; 2, 52, 82: outer peripheral coat portion; 2a, 52a: end face of outer peripheral coat portion; 3, 53: end portion in axial direction; 4: groove; 5: outermost periphery of honeycomb structured portion; 11: honeycomb formed body; 12: outer wall; 13,73: grinding stone; 14, 74: ground honeycomb formed body; 14a: end portion of ground honeycomb formed body; 15, 75: cam; 16: depressed portion; 17, 77: outer periphery-coating material; 18, 78: spatula for coating; 19: engaged portion; 20: unengaged portion; 61: outer peripheral region (tapered portion); 62: starting point of tapering; 63: terminal point of tapering; 81: outer periphery-coated honeycomb formed body; 100, 150: honeycomb structure; 200: metal container; 201: retainer ring; 202: gas seal; 203: wire mesh mat; 204: gas inlet port; A: axial direction; D: distance; W: width of tapered portion; H: depth of tapered portion; T: thickness; C: central portion in axial direction

### Best Mode for Carrying Out the Invention

A best mode for carrying out the present invention will hereinbelow be described specifically with referring to drawings. However, the present invention is by no means limited to the following embodiments, and it should be understood that modifications, improvements, and the like, may be added thereto on the basis of knowledge of a person of ordinary skill in the art within the range of not deviating from the gist of the present invention.

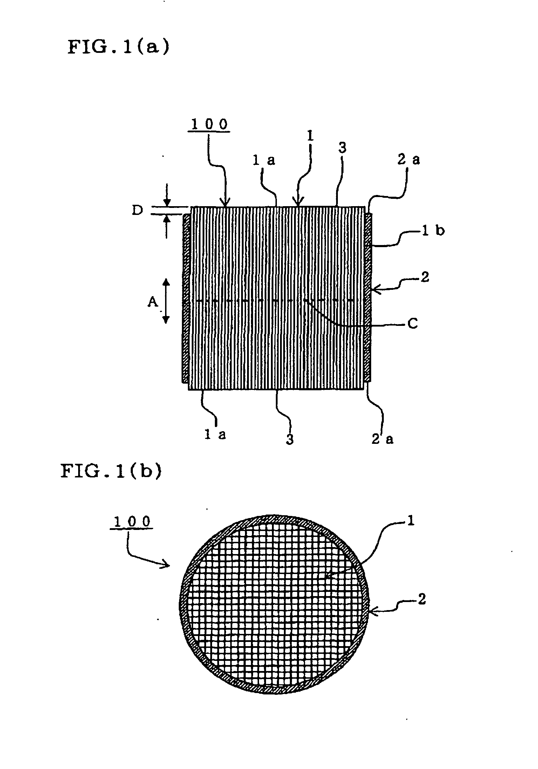

Figs. 1(a) and 1(b) schematically show an embodiment of a honeycomb structure of the present invention. Fig. 1(a) is a cross-sectional view taken along a plane including the central axis (hereinbelow sometimes referred to simply as "axis") (cross-sectional view including the central axis), and Fig. 1(b) is a cross-sectional view taken along a plane perpendicular to the central axis (cross-sectional view perpendicular to the central axis). As shown in Figs. 1(a) and 1(b), a honeycomb structure 100 of the present embodiment is provided with a honeycomb structured portion 1, and an outer peripheral coat portion 2 disposed in the outer periphery 1b of the honeycomb structured portion 1. In both the end portions 3 and 3 in the axial direction, an end face 2a of the outer peripheral coat portion 2 is located on the inside, in the axial direction, of an end face 1a of the honeycomb structured portion 1. Here, "inside, in the axial direction" of "an end face 2a of the outer peripheral coat portion 2 is located on the inside, in the axial direction, of an end face 1a of the honeycomb structured portion" means, as shown in Fig. 1(a), the side closer to the central portion C in the axial direction (central portion in the axial direction A of the honeycomb structure 100) in the axial direction A of the honeycomb structure 100. Therefore, being located on the "inside in the axial direction" means being located closer to the central portion C in the axial direction (having short distance from the central portion C in the axial direction). The central portion C in the axial direction is located at an equal distance from both the end faces of the honeycomb structured portion 1. In a honeycomb structure 100 of the present embodiment, a honeycomb structured portion 1 has porous partition walls separating and forming a plurality of cells functioning as fluid passages and extending in the axial direction. In the present embodiment, end faces 2a of the outer peripheral coat portion in both the end portions 3, 3 in the axial direction are located on the inside, in the axial direction, of the end faces 1a of the honeycomb structured portion. However, in only one end portion in the axial direction, an end face 2a of the outer peripheral coat portion may be located on the inside, in the axial direction, of the end face 1a of the honeycomb structural portion.

Thus, a honeycomb structure of the present embodiment is formed in such a manner that, in at least one end portion in the axial direction, the end face of the outer peripheral coat portion is located on the inside, in the axial direction, of the end face of the honeycomb structured portion. Therefore, when the honeycomb structure is fixed in the metal container in the state that both the end portions of the honeycomb structure are held by retainer rings, the retainer rings are inhibited from being brought into contact with end faces of the outer peripheral coat portion, and chipping of the outer peripheral coat portion and partition walls (partition walls of the honeycomb structured portion).

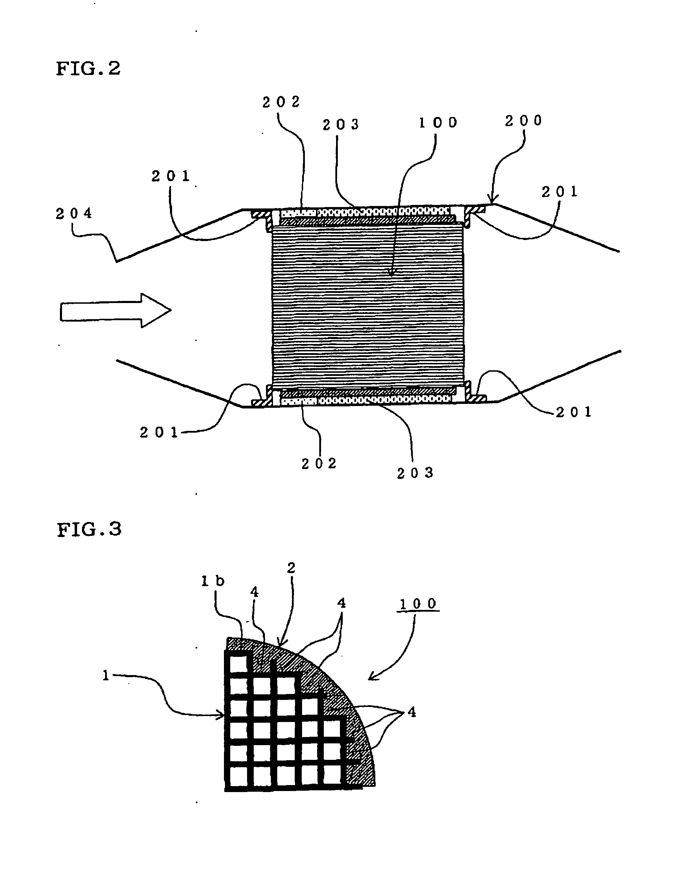

Fig. 2 is a cross-sectional view including the central axis and schematically showing a state that a honeycomb structure 100 of the present embodiment is fixed in a cylindrical metal container 200. As shown in Fig. 2, the honeycomb structure 100 is held by and fixed in the metal container 200 by disposing a wire mesh mat 203 and a gas seal 202 between the outer periphery of the honeycomb structure 100 (outer periphery of the outer peripheral coat portion). As shown in Fig. 2, a gas seal 202 is disposed near the end portion on the gas inlet port 204 of the metal container 200. On the inner surface of the metal container 200, retainer rings 201 are disposed at the position corresponding to both the end portions of the honeycomb structure lest the honeycomb structure should move in the axial direction. As shown in Fig. 2, a honeycomb structure 100 of the present embodiment is formed in such a manner that, in end portions in the axial direction, the end faces of the outer peripheral coat portions are located on the inside, in the axial direction, of the end faces of the honeycomb structured portion. Therefore, it is understood that the retainer rings are brought into contact with the end faces of the honeycomb structured portion and are not brought into contact with end faces of the outer peripheral coat portions. This enables to inhibit the outer peripheral coat portions and partition walls from chipping.

In a honeycomb structure of the present embodiment shown in Figs. 1(a) and 1(b), the distance D in the axial direction between the end faces 2a of the outer peripheral coat portion and the end faces 1a of the honeycomb structured portion is preferably 0.01 mm or more, more preferably 0.1 mm or more, and particularly preferably 0.5 mm or more. In addition, the distance D in the axial direction is preferably 5 mm or less, more preferably 3 mm or less, and particularly preferably 1 mm or less. Such a distance enables to inhibit the outer peripheral coat portion from being brought into contact with the retainer rings more securely with holding the outer peripheral coat portion on its outer surface with sufficiently strong holding force when the honeycomb structure is fixed in the metal container. When the above distance D is shorter than 0.01 mm, the end face of the outer peripheral coat portion are prone to be brought into contact with the retainer ring. When the distance D is longer than 5 mm, exposure of the outer periphery 1b of the honeycomb structured portion is increased, and a contact area between the side surface of the outer peripheral coat portion and the holding member holding the side surface is decreased, which may cause deterioration in holding force. Here, in the case that an end face 2a of the outer peripheral coat portion inclines with respect to an end face 1a of the honeycomb structured portion, the distance D is determined as the distance between the position nearest to the end face 1a of the honeycomb structured portion among the end face 2a of the outer peripheral coat portion and the end face 1a of the honeycomb structured portion.

It is preferable that a honeycomb structure of the present embodiment is provided with plugging portions plugging openings of predetermined cells on one end portion side and openings of remaining cells on the other end portion side. It is further preferable that the predetermined cells and the remaining cells are alternately arranged in such a manner that plugging members are disposed to form a checkerwise pattern at each end face.

As shown in Fig. 3, in the honeycomb structured portion 1 constituting the honeycomb structure 100 of the present embodiment, a surface (outer peripheral surface) of the outer periphery 1b preferably has a plurality of grooves 4 extending in the axial direction and being formed by partition walls constituting the outer peripheral surface. By the groves 4 formed in such a manner by partition walls on the outer peripheral surface of the honeycomb structured portion 1, a contact area between the outer peripheral coat portion 2 and the honeycomb structured portion 1 can be extended to enhance peeling resistance of the outer peripheral coat portion. Such grooves 4 can be formed, for example, by grinding the peripheral edge portion of a honeycomb formed body obtained by extrusion-forming a predetermined raw material to expose partition walls (except for the outer edge portion) forming the cells to the outer peripheral surface. In this case, a portion which has been inside a cell is exposed to the outer peripheral surface, and this portion forms a groove 4 on the outer peripheral surface of the honeycomb structured portion 1. Here, Fig. 3 schematically shows an embodiment of a honeycomb structure 100 of the present invention and is a cross-sectional view where a part of a cross-section perpendicular to the central axis is enlarged.

The honeycomb structured portion 1 has porous partition walls separating and forming a plurality of cells extending in the axial direction as described above, and the shape of the honeycomb structured portion is not particularly limited. For example, the shape is preferably cylindrical columnar as shown in Figs. 1(a) and 1(b). However, any shapes may be employed such as a polygonal column, e.g., quadrangular prism and hexagonal prism, and elliptic column. In addition, the shape of the cross section (cross-section perpendicular to the axial direction) of a cell is not particularly limited, but preferably tetragonal as shown in Fig. 1(b). However, the shape may be a polygon such as a triangle and a hexagon. In addition, the porosity and the mean pore diameter of the partition walls of the honeycomb structured portion 1 are not particularly limited as long as the ceramic having the porosity and the mean pore diameter can be used for an exhaust gas treatment or the like.

There is no particular limitation on the thickness of the partition walls of the honeycomb structured portion 1. However, too thick partition walls may increase pressure loss when fluid passes through the partition walls, and too thin partition walls may have insufficient strength. The partition walls preferably have a thickness of 100 to 100 µm, more preferably 200 to 800 µm. Though there is no particular limitation on the material for the porous partition walls, the material may preferably be ceramic, and further preferably at least one kind selected from the group consisting of cordierite, silicon carbide, sialon, mullite, silicon nitride, zirconium phosphate, zirconia, titania, alumina, and silica.

Though there is no particular limitation on the cell density of the honeycomb structured portion 1, the cell density is preferably 5 to 300 cells/cm², more preferably 10 to 100 cells/cm², particularly preferably 15 to 50 cells/cm².

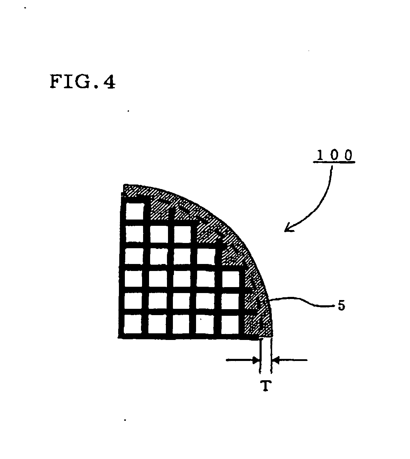

The "outermost periphery 5 of the honeycomb structured portion" means, as shown in Fig. 4, the outer periphery formed by linking the outermost positions of the partition walls exposed to the outer peripheral surface of the honeycomb structured portion. Here, Fig. 4 schematically shows an embodiment of a honeycomb structure of the present invention and is a cross-sectional view where a part of a cross-section perpendicular to the central axis is enlarged.

Though there is no particular limitation on the material for the outer peripheral coat portion 2, the materials described in the Patent Documents 1 and 2 are preferable. There may be employed, for example, a material using powdered potsherd of cordierite, ceramic fibers, and an inorganic binder in combination and a material using cordierite particles and/or ceramic fibers and an oxide matrix of crystalloid formed with colloidal silica or colloidal alumina in combination.

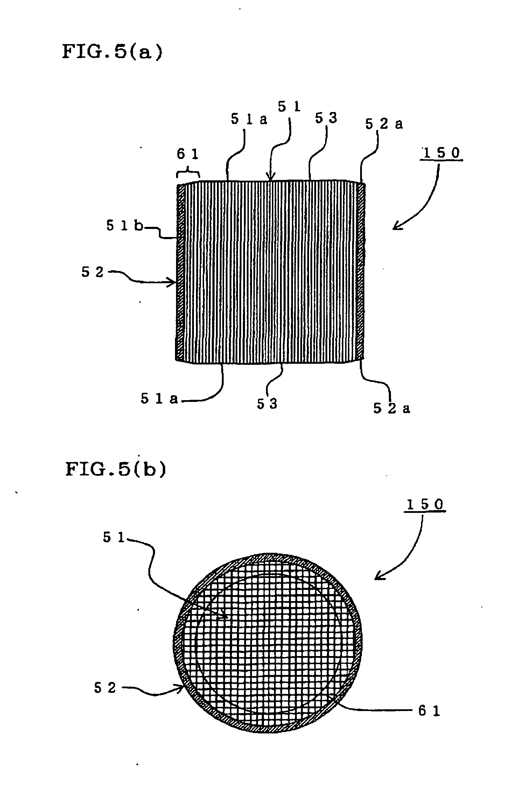

Figs. 5(a) and 5(b) schematically show another embodiment of a honeycomb structure of the present invention. Fig. 5(a) is a cross-sectional view including the central axis, and Fig. 5 (b) is a cross-sectional view perpendicular to the central axis. As shown in Figs. 5(a) and 5(b), a honeycomb structure 150 of the present embodiment is provided with a honeycomb structured portion 51 and an outer peripheral coat portion 52 disposed on the outer periphery 51b of the honeycomb structural portion 51. In both the end portions 53 and 53 in the axial direction, the end faces 52a of the outer peripheral coat portion 52 are located on the inside, in the axial direction, of the end faces 51a of the honeycomb structured portion 51, and both the end portions in the axial direction are formed to have a tapered shape. Only one end portion in the axial direction may be formed into a tapered shape. In the present embodiment, "the end portions in the axial direction are formed to have a tapered shape" means that the outer peripheral region (tapered portion) 61 of each end face in the axial direction of the honeycomb structure is formed to be inclined in such a manner that the outside becomes closer to the inside in the axial direction than the inside of the tapered portion.

Thus, a honeycomb structure of the present embodiment is constituted in such a manner that the end face of the outer peripheral coat portion is located on the inside, in the axial direction, of the end face of the honeycomb structured portion by forming an end portion in the axial direction into a tapered shape. This enables to inhibit the retainer ring from being brought into contact with an end face of the outer peripheral coat portion when the honeycomb structure is fixed in a metal container in a state that both the end portions are held by the retainer rings and enables to inhibit the outer peripheral coat portion and partition walls (partition walls of the honeycomb structured portion) from chipping.

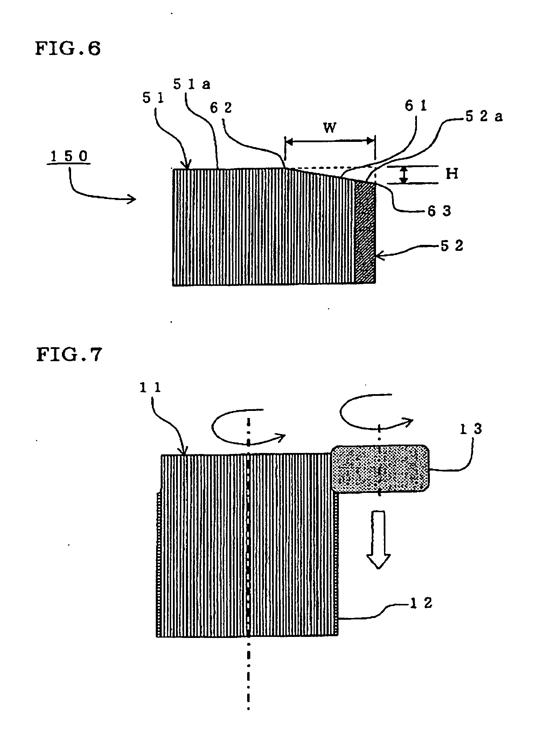

Fig. 6 schematically shows another embodiment of a honeycomb structure of the present invention and is a partial cross-sectional view where a tapered portion 61 in a cross-section including the central axis is enlarged. As shown in Fig. 6, in a honeycomb structure 150 of the present embodiment, when the innermost position of the tapered portion 61 is determined as the starting point 62 of tapering, the starting point 62 of tapering is located on the honeycomb structured portion 51. By such a constitution, an end face 52a of the outer peripheral coat portion is located on the inside, in the axial direction, of an end face 51a of the honeycomb structured portion. That is, since the entire end face of the outer peripheral coat portion 52 is located on the tapered portion 61 by arranging the starting point 62 of tapering not on the outer peripheral coat portion 52 but on the honeycomb structured portion 51, the entire end face 52a of the outer peripheral coat portion is located on the inside, in the axial direction, of the end face 51a of the honeycomb structured portion.

The distance in the radial direction from the outermost periphery of the honeycomb structured portion 51 to the starting point 62 of tapering with cell width employed as a standard is preferably 0.5 cell or more, more preferably 1 cell or more, and particularly preferably 1.5 cells or more. In addition, the distance in the above radial direction is 5 cells or less, more preferably 3 cells or less, particularly preferably 2 cells or less. When the width W of tapering or the distance in the radial direction from the outermost periphery of the honeycomb structured portion 51 to the starting point 52 of tapering is too long, the condition of contact of the retainer rings upon canning is unstable, which is not preferable. Here, "1 cell" means the maximum width in a cross section perpendicular to the axial direction of a cell. For example, in a cell having a rectangle cross section, the length of a diagonal line corresponds to the maximum width, which is the length for "1 cell".

As shown in Fig. 6, when the outermost peripheral portion of the tapered portion 61 is determined as the terminal point 63 of tapering, the distance H in the axial direction between the starting point 62 of tapering and the terminal point 63 of tapering is preferably 0.01 mm or more, more preferably 0.1 mm or more, and particularly preferably 0.3 mm or more.. In addition, the distance H is preferably 5 mm or less, more preferably 3 mm or less, particularly preferably 2 mm or less, and most preferably 1 mm or less. When the distance H is too long, the tapered angle is too large to make the condition of contact of the retainer rings upon canning unstable, which is not preferable. Instead of forming the tapered portion, the end face of the honeycomb structure may be formed not in a flat shape but in a mildly protruded shape. In the outer peripheral portion, a slant is formed as the tapered portion is formed.

A honeycomb structure of the present embodiment is preferably in the same conditions as the case of the aforementioned embodiment of a honeycomb structure of the present invention except for the constitution where an end face of the outer peripheral coat portion is located on the inside, in the axial direction, of the end face of the honeycomb structured portion by forming the end portion in the axial direction into a tapered shape.

Next, an embodiment of a method for manufacturing a honeycomb structure (first aspect of the manufacturing method) of the present invention will be described. An embodiment of the aforementioned honeycomb structure of the present invention can be manufactured by a manufacturing method of the present embodiment.

First, a honeycomb-shaped formed body having a unitarily formed outer wall is manufactured by preparing clay by kneading a predetermined forming raw material and forming the clay. The honeycomb-shaped formed body is dried and fired to manufacture a honeycomb formed body. At this time, there is no particular limitation on the composition of the forming raw material, forming conditions, drying and firing conditions, and the like; and known conditions can suitably be selected according to the intended honeycomb structure. The obtained honeycomb formed body has porous partition walls separating and forming a plurality of cells functioning as fluid passages and extending in the axial direction. Since this honeycomb formed body is to serve as the honeycomb structured body constituting a honeycomb structure obtained in a method for manufacturing a honeycomb structure of the present embodiment, elements in common with the honeycomb structured portion constituting the aforementioned embodiment of a honeycomb structure of the present invention preferably satisfy similar conditions.

For example, as a method for preparing clay by kneading the forming raw material, there may be employed a method using a kneader, a vacuum kneading machine, or the like. The predetermined forming raw material may suitably be selected according to a desired material.

As a method for manufacturing a honeycomb-shaped formed body, there may be employed a conventionally known forming method such as extrusion forming, injection forming, and press forming. Of these, a method of subjecting clay prepared as described above to extrusion forming using a die having predetermined thickness of the outer peripheral wall, thickness of partition walls, and cell density is a suitable example.

As a method for drying, there may be employed a conventionally known drying method such as hot air drying, microwave drying, dielectric drying, drying under reduced pressure, vacuum drying, freeze drying, and superheated steam drying. Of these, a drying method where hot air drying is combined with microwave drying or dielectric drying is preferable so that the entire formed body can be dried quickly and uniformly. The drying conditions can suitably be selected according to the shape of the honeycomb-shaped forming body, the material, and the like.

The honeycomb-shaped formed body dried in the aforementioned method is fired in a furnace to manufacture a honeycomb formed body. The furnace and the firing conditions can suitably be selected according to the shape, material, and the like, of the honeycomb-shaped formed body. An organic matter such as a binder may be combusted and removed by calcination before firing.

In addition, plugging may be performed on both the end faces in a checkerwise pattern after drying or firing the honeycomb-shaped formed body. As the plugging method, a known method may be employed.

Next, a part (peripheral edge portion) of the outer wall and partition walls of the honeycomb formed body obtained above is ground to form a ground honeycomb formed body. Fig. 7 is a cross-sectional view including the axial direction and schematically showing grinding of a peripheral edge portion of a honeycomb formed body with a grinding stone. As shown in Fig. 7, a grinding stone 13 is brought into contact with the outer peripheral wall 12 with rotating a honeycomb-shaped fired body 11 around the central axis to grind the peripheral edge portion including the outer wall 12. It is preferable that the grinding stone 13 is brought into contact with the outer wall 12 with being rotated and that the honeycomb-shaped fired body 11 is machined in a traverse grinding method where the entire outer wall of the honeycomb-shaped fired body 11 is ground with moving the grinding stone 13 from one end portion to the other end portion of the honeycomb-shaped fired body 11 in parallel with the central axis thereof in that machining quality is secured. Since chipping may be caused at a corner upon detachment in the end portion where the grinding stone is detached, there may be employed a method where the grinding stone is detached outside the honeycomb-shaped fired body 11 in the middle of the honeycomb-shaped fired body 11 to move the other end portion and then grinds the entire outer wail of the honeycomb-shaped fired body 11 with moving the grind stone from the other end portion to the starting end portion in the opposite direction. There is no limitation on a method for rotating the honeycomb structure 11 and an apparatus therefor. There may be employed a plunge grinding where grinding is performed with a grinding stone at one time over the entire length of the honeycomb formed body. Alternatively, substituting for grinding, cutting may be performed with a cutting tool or a screw-shaped cutting tool.

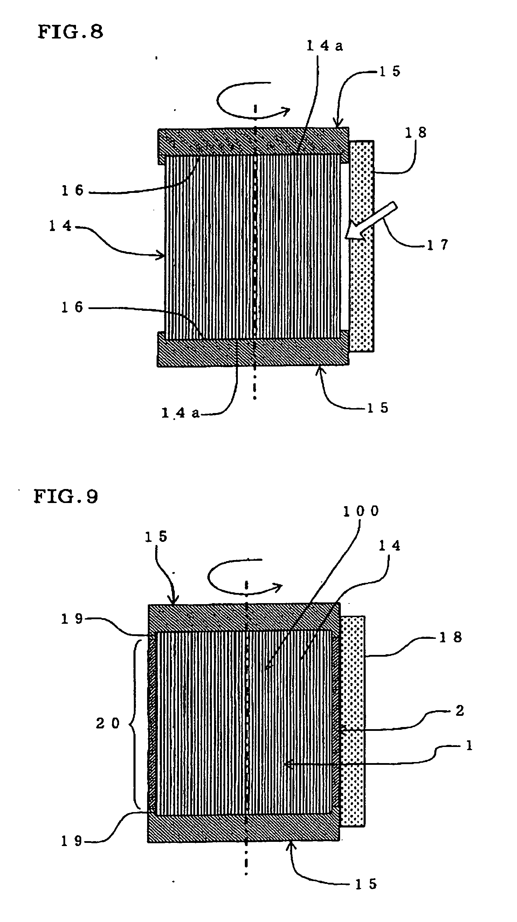

Next, as shown in Fig. 8, a ground honeycomb formed body 14 obtained above is held by two cams 15 and 15 each having a depressed portion 16 capable of being engaged with each end portion of the ground-honeycomb formed body 14 in a state that each of the depressed portions 16 and 16 is engaged with each of the end portions 14a and 14a of the ground honeycomb formed body 14; and an outer periphery-coating material 17 is supplied to the outer periphery of the ground honeycomb formed body 14 with leveling the outer periphery-coating material 17 with a spatula 18 in a state that the ground honeycomb formed body 14 and the two cams 15 and 15 are rotated around the axis of the ground honeycomb formed body 14. By this operation, as shown in Fig. 9, an outer peripheral coat portion 2 is formed on a portion (unengaged portion) 20 other than portions (engaged portions) 19 engaged with the cams 15 of the outer periphery of the ground honeycomb formed body 14 to manufacture a honeycomb structure 100. The outer peripheral coat portion 2 is formed in a portion corresponding to a gap between the outer periphery of the ground honeycomb formed body 14 and the spatula 18. Here, Fig. 8 is a cross-sectional view including the central axis and schematically showing a step in an embodiment of a method for manufacturing a honeycomb structure (first aspect of the manufacturing method) of the present invention, and Fig. 9 is a cross-sectional view including the central axis and schematically showing a state that a honeycomb structure is manufactured in an embodiment of a method for manufacturing a honeycomb structure (first aspect of the manufacturing method) of the present invention. Though each step is performed with disposing the honeycomb structure in such a state that the direction of the entire length is perpendicular to the surface where the honeycomb structure is disposed in Figs. 7 to 10, the direction of disposition of the honeycomb structure is not limited in the perpendicular direction, and it may be disposed in the horizontal direction or an oblique direction may be employed to conduct the same steps.

As described above, in a method for manufacturing a honeycomb structure of the present embodiment, since the outer periphery-coating material 17 is supplied in the state that each of the two cams 15 and 15 is engaged with each of both the end portions of the ground honeycomb formed body 14, the outer periphery-coating material 17 is not applied on the engaged portions 19 which are not exposed outside by the engagement of the cams 15 but applied on the unengaged portion 20 in the state that it is exposed outside because the cams 15 are not engaged therewith. This enables to obtain a honeycomb structure where the end portions of the outer peripheral coat portion 2 are located on the inside, in the peripheral direction, of the end faces of the honeycomb structured portion 1 in the end portions in the axial direction. The cam 15 having a depressed portion 16 is engaged with at least one end portion of the ground honeycomb formed body 14, and the ground honeycomb formed body may be held between a cam 15 having a depressed portion 16 and a cam having no depressed portion.

The cam 15 is preferably a disc-shaped (or cylindrical) member having a depressed portion of a predetermined size in the central portion on a face on one side. The predetermined size means a diameter with which the cam can be engaged with the ground honeycomb formed body and a depth corresponding to the distance between the end face of the honeycomb structured portion and the end portion of the outer peripheral coat portion of the resultant honeycomb structure. Since the depressed portion of the cam 15 is formed in such a manner that it can be engaged with the end portion of the ground honeycomb formed body, the outer diameter of the cam 15 is larger than that of the ground honeycomb formed body. There is no particular limitation on the material for the cam 15, and ceramic, metal, resin, or wood may be'employed. Since a sliding portion of a spatula has hard wear, abrasion resistant material is preferably used.

The spatula 18 for coating is preferably a plate-like member which is longer than a length of the unengaged portion 20 in the central axial direction. When the outer periphery-coating material 17 is supplied to the outer periphery of the ground honeycomb formed body 14, it is preferable to level the outer periphery-coating material 17 with bringing a spatula 18 for coating into contact with both the two cams 15 and 15 in such a manner that the spatula 18 is disposed in parallel with the central axis of the ground honeycomb formed body 14. Since the outer periphery-coating material 17 is applied with thus leveling the material with a spatula 18 for coating, the thickness of the outer peripheral coat portion corresponds to the size of the gap between the outermost periphery of the ground honeycomb formed body and the spatula 18 for coating. Though the material for the spatula 18 for coating is not particularly limited, the spatula 18 has hard wear with the holding member 14, abrasion resistant material such as ceramic and metal is suitably used. When a coat layer is not formed sufficiently on the outer peripheral surface with the spatula 18 for coating being rotated around the outer peripheral surface of the honeycomb formed body 14 only one round, the coat layer is formed with the spatula 18 for coating being rotated plural times to obtain good conditions of application. In addition, at the terminal point of application with the spatula for coating, a subtle difference in level is generated on a surface of the coat layer. In order to eliminate the difference, after the completion of coating, the supply of the coating material is stopped, and the spatula for coating is rotated; or after the completion of coating, the portion having the difference is removed. When the difference does not matter upon canning, the difference may be left intact.

The method and apparatus for rotating the ground honeycomb formed body 14 is preferably the same as those for rotating the honeycomb formed body 11 (see Fig. 7) described above. Though hot air drying at 100 to 200°C is general as a method for drying the outer peripheral coat layer, outdoor sun drying, indoor natural drying, or a combination with windless drying by an electric heater, far-infrared radiation, or the like, is suitable in order to inhibit the coat layer from crack due to drying. In addition, also a combination with a means for adjusting a drying rate by humidification is suitable. Further, it is also suitable to further performing a thermal treatment at high temperature after drying to harden the coat layer.

Next, an embodiment of a method for manufacturing a honeycomb structure (second aspect of the manufacturing method) of the present invention will be described. By a manufacturing method of the present embodiment, another embodiment of a honeycomb structure of the present invention described above can be manufactured.

First, the peripheral edge portion of the honeycomb formed body having porous partition walls separating and forming a plurality of cells functioning as fluid passages and extending in the axial direction is ground to form a ground honeycomb formed body. It is preferable that the method for manufacturing a honeycomb formed body and the method for manufacturing the ground honeycomb formed body are the same as those of the aforementioned first aspect of the manufacturing method.

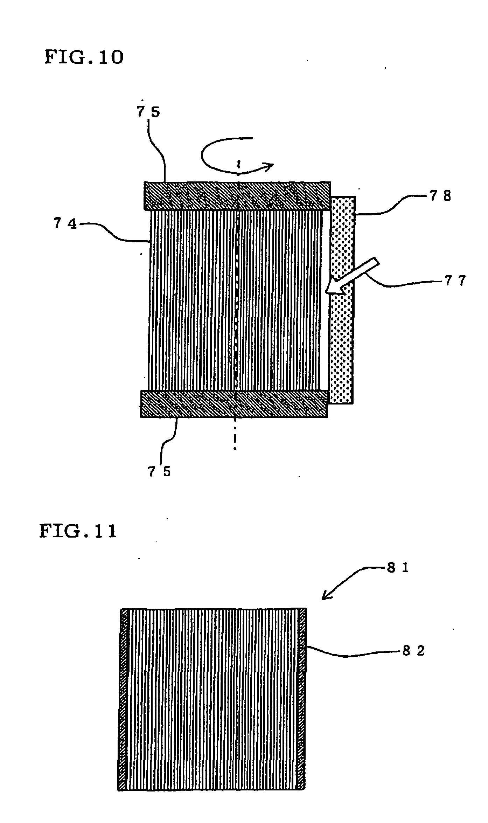

Next, as shown in Fig. 10, the ground honeycomb formed body 74 is interposed between the two cams 75 and 75, and the outer periphery-coating material 77 is supplied to the outer periphery of the ground honeycomb formed body 74 with leveling the outer periphery-coating material 77 with the spatula 78 for coating to form the outer peripheral coat portion in the state that the ground honeycomb formed body 74 and the two cams 75 and 75 are rotated around the axis of the round honeycomb formed body 74 to obtain the outer periphery-coated honeycomb formed body 81 having the outer peripheral coat portion 82 as shown in Fig. 11. The outer peripheral coat portion is formed in a portion corresponding with the gap between the outer periphery of the ground honeycomb formed body 74 and the spatula 78 for coating. Fig. 10 is a cross-sectional view including the central axis and schematically showing a step in an embodiment of a method for manufacturing a honeycomb structure (second aspect of the manufacturing method) of the present invention, and Fig. 11 is a cross-sectional view including the central axis and schematically showing an outer periphery-coated honeycomb formed body obtained in an intermediate stage in an embodiment of a method for manufacturing a honeycomb structure (second aspect of the manufacturing method) of the present invention.

As shown in Fig. 10, in a step for forming an outer periphery-coated honeycomb formed body, the cams 75 holding both the end portions in the axial direction of the ground honeycomb formed body 74 do not need to have a depressed portion as the cams 15 (see Fig. 18) used in the aforementioned first aspect of the manufacturing method and may hold the end faces of the ground honeycomb formed body with a flat surface. Thus, since the end faces of the ground honeycomb formed body is held only with flat surfaces of the cams 75 when the ground honeycomb formed body is held by the cams 75, the outer periphery-coating material 77 is applied on the entire outer peripheral surface of the ground honeycomb formed body 74 to obtain, as shown in Fig. 11, the outer periphery-coated honeycomb formed body 81 with no exposed portion on the outer peripheral surface of the ground honeycomb formed body. The shape of the cams 75 is not particularly limited, and any shape such as a disk shape and a cylindrical shape may be employed. The size (diameter) of the cams 75 is preferably larger than the diameter of the end faces of the honeycomb formed body.

The shape, material, and method for use of the spatula 78 for coating are preferably the same as those of the spatula 18 for coating in the aforementioned first aspect of the manufacturing method.

The method and apparatus for rotating the ground honeycomb formed body 74 in the aforementioned first aspect of the manufacturing method is preferably the same as those for the honeycomb formed body 11 (see Fig. 7).

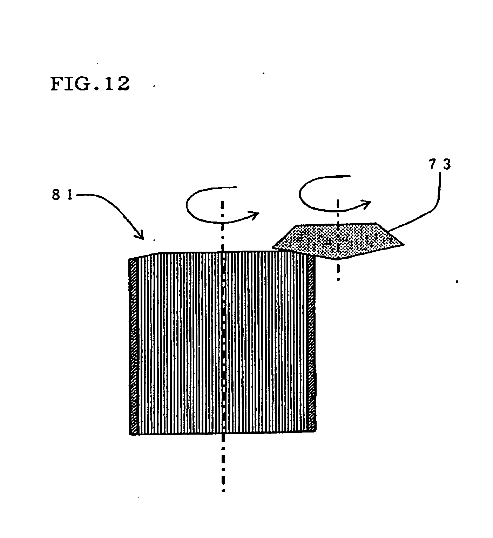

Next, as shown in Fig. 12, at least one end portion in the.axial direction (outer peripheral portion of an end face in the axial direction) of the outer periphery-coated honeycomb formed body 81 is machined into a tapered shape to manufacture a honeycomb structure. When an end portion in the axial direction of the outer periphery-coated honeycomb formed body 81 is machined into a tapered shape, it is preferable that the grinding stone 73 is brought into contact with the outer peripheral region of the end face in the axial direction of the outer periphery-coated honeycomb formed body 81 at a predetermined angle. By thus machining an end portion in the axial direction of the outer periphery-coated honeycomb formed body 81 into a tapered shape, another embodiment (honeycomb structure 150) of a honeycomb structure of the present invention with an end portion in the axial direction being formed into a tapered shape as shown in Figs. 5(a) and 5(b) can be obtained. Here, Fig. 12 is a cross-sectional view including the central axis and schematically showing a step in an embodiment of a method for manufacturing a honeycomb structure (second aspect of the manufacturing method) of the present invention.

It is preferable that the angle where the grind stone 73 is brought into contact with the outer peripheral region of an end face in the axial direction of the outer periphery-coated honeycomb formed body 81 and the amount of grinding (depth of grinding in the axial direction or diametral direction) are preferably under the conditions (conditions of the width W and the depth H of the tapered portion) where the shape of the tapered portion 61 (outer peripheral region) in another embodiment (honeycomb structure 150) of a honeycomb structure of the present invention shown in Figs. 5(a), 5(b), and 6 can be obtained. The material for the grinding stone 73 is not particularly limited, and the same material as the grinding stone 13 (see Fig. 7) used upon grinding the peripheral edge portion of the honeycomb formed body in the above first aspect of the manufacturing method can be employed. The shape of the grinding stone 73 is not particularly limited, and, for example, a grinding stone having a cone shaped tip with a slant at a predetermined angle as shown in Fig. 12 is preferable. In this case, it is preferable to grind the outer periphery-coated honeycomb formed body with bringing the tip of the cone shape into contact with the end portion of the outer periphery-coated honeycomb formed body and rotating the grinding stone around the central axis of the cone shape. It is preferable that both the central axis of the outer periphery-coated formed body and the central axis of the grinding stone are disposed in the vertical direction in that the angle of tapering can easily be adjusted. In addition, the shape of the grinding stone 73 may simply be a disc shape. In this case, the grinding stone 73 may be brought into contact with the end face of the outer periphery-coated honeycomb formed body while the central axis (center of the rotation) of the disc is inclined with respect to the central axis of the outer periphery-coated honeycomb formed body at a predetermined angle. The angle of the inclination of the cone shape and the angle of the central axis of the disc are preferably the angles at which the shape of the tapered portion (outer peripheral region) 61 in another embodiment (honeycomb structure 150) of a honeycomb structure of the present invention shown in Fig. 6 can be formed.

The method and apparatus for rotating the outer periphery-coated honeycomb formed body 81 are preferably the same as those for rotating the aforementioned honeycomb formed body 11 (see Fig. 7).

### Example

The present invention will hereinbelow be described more specifically by Examples. However, the present invention is by no means limited to these Examples.

### (Example 1)

A cordierite-forming material was used as a forming material and kneaded with a kneader to prepare clay. The clay was subjected to extrusion forming into a honeycomb shape using a die having a cell structure of tetragonal cells of 0.3048 mm/46.5 (cells/cm²) (12 mil/300 cpsi), a cell pitch of 1.47 mm, and an outer diameter several millimeters larger than 354 mm. Next, both the end faces of the honeycomb-shaped formed body were alternately plugged, dried, and fired to obtain a honeycomb formed body.

Then, the peripheral edge portion of the honeycomb formed body was ground to obtain a ground honeycomb formed body having the diameter of the outermost periphery of 354 mm. Then, the outer peripheral coat portion was formed using the cams 15 having a depressed portion and the spatula 18 for coating as shown in Fig. 8 to obtain a honeycomb structure having a diameter of 356 mm where the end faces of the outer peripheral coat portion were located on the inside in the axial direction of the end faces of the honeycomb structured portion. The honeycomb structured portion had a length in the axial direction of 432 mm. In addition, the distance between the end faces of the outer peripheral coat portion and the end faces of the honeycomb structured portion in the axial direction was 0.2 mm.

### (Example 2)

A ground honeycomb formed body having a cell structure of tetragonal cells of 0.4318 mm/15.5 (cells/cm².) 17 mil/100 cpsi, a cell pitch of 2.54 mm, and a diameter of the outermost periphery of 404 mm. Then, as shown in Fig. 11, a coating material was applied on the outer periphery to obtain an outer periphery-coated honeycomb formed body 81 of 406 mm in diameter × 432 mmL (length in the axial direction). Then, as shown in Fig. 12, the outer peripheral portion of each end face in the axial direction of the outer periphery-coated honeycomb formed body 81 was ground into a tapered shape using a grinding stone to obtain a honeycomb structure where both the end faces were formed into a tapered shape as shown in Figs. 5(a) and 5(b). The width W of the tapered portion (see Fig. 6) was 5 mm, and the depth H of the tapered portion (see Fig. 6) was 0.4 mm.

### (Comparative Example 1)

As a honeycomb structure in Comparative Example 1, an outer periphery-coated honeycomb formed body 81 shown in Fig. 11 and having the same size and cell structure as in Example 2 was manufactured in the same manner as in Example 2.

The honeycomb structures of Examples 1, 2 and Comparative Example 1 were subjected to canning in a converter to perform a burner spalling test where heating with a gas burner and cooling are repeated under the following conditions, and the state of the end faces of each honeycomb structure was observed.

### (Conditions for burner spalling test)

### Test apparatus: Gas burner spalling apparatus

Heating condition (for one cycle): Temperature was raised from 100(lowest temperature) to 750°C (highest temperature) for ten minutes, kept at 750°C for 10 minutes, lowered from 750 to 100°C for 30 minutes, and kept at 100°C for 10 minutes.

### Number of heating cycle: 200 cycles

As a result of the burner spalling test, the honeycomb structure of Example 1 had no chipped portion at the end faces of the outer peripheral coat portion and little chipped portion in the outer peripheral portion of the end face of the honeycomb structured portion. However, the chipping was not particularly a matter of use of the honeycomb structure. The honeycomb structure of Example 2 had no chipping in either the outer peripheral coat portion or the honeycomb structured portion. The honeycomb structure of Comparative Example 1 had large chipped portion on the end faces of both the outer peripheral coat portion and the honeycomb structured portion. From these results, it is understood that chipping of the end face can be inhibited by the constitution where the end faces of the outer peripheral coat portion are located on the inside, in the axial direction, of the end faces of the honeycomb structured portion.

### Industrial Applicability

The present invention can be used in order to trap particulate matter such as dust contained in automobile exhaust gas or combustion exhaust gas or the like generated upon combustion of wastes and further in order to adsorb and absorb NOₓ, CO, HC, and the like, in the above exhaust gas by a catalyst loaded on the honeycomb structures and can inhibit damages such as chipping in an end portion from being caused upon a treatment of exhaust gas or the like while the honeycomb structure of the present invention is fixed in a metal container.

## Claims

1. A honeycomb structure (100, 150) comprising:
a honeycomb structured portion (1, 51) having porous partition walls separating and forming a plurality of cells functioning as fluid passages and extending in an axial direction (A), and
an outer peripheral coat portion (2, 52, 82) disposed on the outer periphery (1b, 51b) of the honeycomb structured portion;
**characterized in that**
an end face (2a, 52a) of the outer peripheral coat portion (2, 52, 82) is located inwardly, in the axial direction, from an end face (1a, 51a) of the honeycomb structured portion (1, 51) in at least one end portion in the axial direction.

2. A honeycomb structure according to Claim 1, wherein the end portion in the axial direction is formed into a tapered shape.

3. A honeycomb structure according to Claim 1 or 2, wherein the honeycomb structure is further provided with plugging portions plugging openings of predetermined cells on one end portion side and openings of remaining cells on the other end portion side.

4. A method of manufacturing a honeycomb structure according to any one of claims 1 to 3, the method comprising:
a step of forming a ground honeycomb formed body (14) by grinding a peripheral edge portion (12) of a honeycomb formed body having porous partition walls separating and forming a plurality of cells functioning as fluid passages and extending in an axial direction (A), and
a step of forming the outer peripheral coat portion (2) on a portion (unengaged portion) other than portions (engaged portions) engaged with cams (15) of the outer periphery (5) of the ground honeycomb formed body by interposing the ground honeycomb formed body between the two cams (15) each having a depressed portion (16) capable of engaging with an end portion (14a) of the ground honeycomb formed body in a state that the depressed portion (16) of each of the cams (15) is engaged with each end portion (14a) of the ground honeycomb formed body, supplying an outer periphery-coating material (17) to the outer periphery of the ground honeycomb formed body with leveling the outer periphery-coating material with a spatula (18) in a state that the ground honeycomb formed body and the two cams are rotated around an axis of the ground honeycomb formed body (14).

5. A method of manufacturing a honeycomb structure according to any one of claims 1 to 3, the method comprising:
a step of forming a ground honeycomb formed body (74) by grinding a peripheral edge portion (12) of a honeycomb formed body having porous partition walls separating and forming a plurality of cells functioning as fluid passages and extending in an axial direction (A),
a step of forming an outer periphery-coated honeycomb formed body (81) by forming the outer peripheral coat portion (82) by interposing the ground honeycomb formed body (74) between two cams (75), supplying the outer periphery-coating material (77) to the outer periphery of the ground honeycomb formed body with leveling the outer periphery-coating material with a spatula (78) in a state that the ground honeycomb formed body and the two cams (75) are rotated around the axis of the ground honeycomb formed body, and
a step of machining at least one end portion in the axial direction of the outer periphery-coated honeycomb formed body (81) into a tapered shape.

## Patentansprüche

1. Wabenstruktur (100, 150), umfassend:
einen Abschnitt (1, 51) mit Wabenstruktur, der poröse Trennwände aufweist, die eine Vielzahl von Zellen trennen und ausbilden, die als Fluiddurchlässe fungieren und sich in eine Axialrichtung (A) erstrecken, und
einen Außenumfangsschichtabschnitt (2, 52, 82), der auf dem Außenumfang (1 b, 51 b) des Abschnitts mit Wabenstruktur angeordnet ist;
**dadurch gekennzeichnet, dass**
eine Endfläche (2a, 52a) des Außenumfangsschichtabschnitts (2, 52, 82) in zumindest einem Endabschnitt in die Axialrichtung von einer Endfläche (1a, 51 a) des Abschnitts (1, 51) mit Wabenstruktur nach innen in die Axialrichtung angeordnet ist.

2. Wabenstruktur nach Anspruch 1, worin der Endabschnitt in die Axialrichtung in einer konischen Form ausgebildet ist.

3. Wabenstruktur nach Anspruch 1 oder 2, worin die Wabenstruktur ferner mit Verschlussabschnitten bereit gestellt ist, die Öffnungen vorbestimmter Zellen an einer Endabschnittseite und Öffnungen von restlichen Zellen auf der anderen Endabschnittsseite verschließen.

4. Verfahren zur Herstellung einer Wabenstruktur nach einem der Ansprüche 1 bis 3, wobei das Verfahren Folgendes umfasst:
einen Schritt des Ausbildens eines geschliffenen wabenförmigen Körpers (14) durch Schleifen eines Umfangsrandabschnitts (12) eines wabenförmigen Körpers mit porösen Trennwänden, die eine Vielzahl von Zellen trennen und ausbilden, die als Fluiddurchlässe fungieren und sich in eine Axialrichtung (A) erstrecken, und
einen Schritt des Ausbildens des Außenumfangsschichtabschnitts (2) auf einem Abschnitt (nicht in Eingriff stehender Abschnitt), der ein anderer ist als die Abschnitte (in Eingriff stehende Abschnitte), die mit Nocken (15) des Außenumfangs (5) des geschliffenen wabenförmigen Körpers in Eingriff stehen, indem der geschliffene wabenförmige Körper zwischen die zwei Nocken (15) angeordnet wird, von denen jede einen vertieften Abschnitt (16) aufweist, der in einen Endabschnitt (14a) des geschliffenen wabenförmigen Körpers eingreifen kann in einem Zustand, indem der vertiefte Abschnitt (16) jeder der Nocken (15) mit jedem Endabschnitt (14a) des geschliffenen wabenförmigen Körpers in Eingriff steht, Zuführen eines Außenumfangsschichtmaterials (17) auf den Außenumfang des geschliffenen wabenförmigen Körpers unter Glättung des Außenumfangsschichtmaterials mit einer Spachtel (18) in einem Zustand, in dem der geschliffene wabenförmige Körper und die zwei Nocken um eine Achse des geschliffenen wabenförmigen Körpers (14) gedreht werden.

5. Verfahren zur Herstellung einer Wabenstruktur nach einem der Ansprüche 1 bis 3, wobei das Verfahren Folgendes umfasst:
einen Schritt des Ausbildens eines geschliffenen wabenförmigen Körpers (74) durch Schleifen eines Umfangsrandabschnitts (12) eines wabenförmigen Körpers mit porösen Trennwänden, die eine Vielzahl von Zellen trennen und ausbilden, die als Fluiddurchlässe fungieren und sich in eine Axialrichtung (A) erstrecken, und
einen Schritt des Ausbildens eines Außenumfangs-beschichteten wabenförmigen Körpers (81) durch Ausbilden des Außenumfangsschichtabschnitts (82), indem der geschliffene wabenförmige Körper (74) zwischen zwei Nocken (75) angeordnet wird, Zuführen des Außenumfangsschichtmaterials (77) auf den Außenumfang des geschliffenen wabenförmigen Körpers unter Glättung des Außenumfangsschichtmaterials mit einer Spachtel (78) in einem Zustand, in dem der geschliffene wabenförmige Körper und die zwei Nocken (75) um die Achse des geschliffenen wabenförmigen Körpers gedreht werden, und
einen Schritt des Bearbeitens des Außenumfangs-beschichteten wabenförmigen Körpers (81) an zumindest einem Endabschnitt in die Axialrichtung zu einer konischen Form.

## Revendications

1. Structure en nid d'abeilles (100, 150) comprenant :
une partie à structure en nid d'abeilles (1, 51) comportant des parois de séparation poreuses séparant et formant une pluralité de cellules fonctionnant en tant que passages de fluide et s'étendant dans une direction axiale (A), et
une partie de revêtement périphérique extérieure (2, 52, 82) disposée sur la périphérie extérieure (1b, 51b) de la partie à structure en nid d'abeilles ;
**caractérisée en ce que**
une face d'extrémité (2a, 52a) de la partie de revêtement périphérique extérieure (2, 52, 82) est située vers l'intérieur, dans la direction axiale, par rapport à une face d'extrémité (1a, 51a) de la partie à structure en nid d'abeilles (1, 51) dans au moins une partie d'extrémité dans la direction axiale.

2. Structure en nid d'abeilles selon la revendication 1, dans laquelle la partie d'extrémité dans la direction axiale est réalisée en une forme effilée.

3. Structure en nid d'abeilles selon la revendication 1 ou 2, dans laquelle la structure en nid d'abeilles est en outre pourvue de parties d'obturation obturant les ouvertures de cellules prédéterminées du côté d'une partie d'extrémité et les ouvertures des cellules restantes du côté de l'autre partie d'extrémité.

4. Procédé de fabrication d'une structure en nid d'abeilles selon l'une quelconque des revendications 1 à 3, le procédé comprenant :
une étape de formation d'un corps en forme de nid d'abeilles meulé (14) en meulant une partie de bord périphérique (12) d'un corps en forme de nid d'abeilles comportant des parois de séparation poreuses séparant et formant une pluralité de cellules fonctionnant en tant que passages de fluide et s'étendant dans une direction axiale (A), et
une étape de formation de la partie de revêtement périphérique extérieure (2) sur une partie (partie non en prise) autre que les parties (parties en prise) en prise avec les cames (15) de la périphérie extérieure (5) du corps en forme de nid d'abeilles meulé en interposant le corps en forme de nid d'abeilles meulé entre les deux cames (15) ayant chacune une partie en retrait (16) capable de venir en prise avec une partie d'extrémité (14a) du corps en forme de nid d'abeilles meulé dans un état dans lequel la partie en retrait (16) de chacune des cames (15) est en prise avec chaque partie d'extrémité (14a) du corps en forme de nid d'abeilles meulé, en fournissant un matériau de revêtement de périphérie extérieure (17) à la périphérie extérieure du corps en forme de nid d'abeilles meulé avec une égalisation du matériau de revêtement de périphérie extérieure au moyen d'une spatule (18) dans un état dans lequel le corps en forme de nid d'abeilles meulé et les deux cames sont mis en rotation autour d'un axe du corps en forme de nid d'abeilles meulé (14).

5. Procédé de fabrication d'une structure en nid d'abeilles selon l'une quelconque des revendications 1 à 3, le procédé comprenant :
une étape de formation d'un corps en forme de nid d'abeilles meulé (74) en meulant une partie de bord périphérique (12) d'un corps en forme de nid d'abeilles comportant des parois de séparation poreuses séparant et formant une pluralité de cellules fonctionnant en tant que passages de fluide et s'étendant dans une direction axiale (A),
une étape de formation d'un corps en forme de nid d'abeilles revêtu sur une périphérie extérieure (81) en formant la partie de revêtement périphérique extérieure (82) en interposant le corps en forme de nid d'abeilles meulé (74) entre deux cames (75), en fournissant le matériau de revêtement de périphérie extérieure (77) à la périphérie extérieure du corps en forme de nid d'abeilles meulé avec une égalisation du matériau de revêtement de périphérie extérieure au moyen d'une spatule (78) dans un état dans lequel le corps en forme de nid d'abeilles meulé et les deux cames (75) sont mis en rotation autour de l'axe du corps en forme de nid d'abeilles meulé, et
une étape d'usinage d'au moins une partie d'extrémité dans la direction axiale du corps en forme de nid d'abeilles revêtu sur une périphérie extérieure (81) en une forme effilée.
